# EUROPÄISCHE PATENTANMELDUNG

(11) **EP 2 017 561 A2**
(43) Veröffentlichungstag der Anmeldung: **21.01.2009**
(21) Anmeldenummer: 08012928.1
(22) Anmeldetag: 17.07.2008
(51) Int. Cl.: F28D 20/00

(54) **Wärmespeicher**

(30) Priorität: 18.07.2007 DE 102007033734
(71) Anmelder: Brecht, Wido E., 67660 Betschdorf (FR)
(72) Erfinder: Brecht, Wido E., 67660 Betschdorf (FR)
(74) Vertreter: Mierswa, Klaus

(57) **Zusammenfassung**

Wärmespeicher, insbesondere als Teil einer Solaranlage, einer solaren Warmwasseranlage oder einer Geothermie-Anlage zur Beheizung eines Gebäudes, mit folgenden Komponenten:
a) wenigstens einen Wärmespeicherkörper (WSK), welcher eine Mehrzahl von Schichten (S1-S7) aufweist, deren jede durch eine Mehrzahl oder Vielzahl von jeweils monolithischen Bausteinen (B) gebildet ist,
b) und wenigstens zwei Wärmetransportleitungen (T) nämlich eine von einem ersten Fluid durchflossene oder durchfließbare Wärmezufuhrleitung (T1), welche in den Wärmespeicherkörper (WSK) eingebettet ist und in wenigstens einer der Schichten verläuft, wobei das erste Fluid Wärme an den Wärmespeicherkörper abzugeben und diesen hierdurch aufzuheizen imstande ist, sowie eine von einem zweiten Fluid durchflossene oder durchfließbare Wärmeentnahmeleitung (T2), welche ebenfalls in den Wärmespeicherkörper (WSK) eingebettet ist und ebenfalls in wenigstens einer der Schichten verläuft, wobei das zweite Fluid Wärme aus dem Wärmespeicherkörper (WSK) aufzunehmen und nach außerhalb des Wärmespeichers abzuführen imstande ist.

## Beschreibung

### Technisches Gebiet:

Die Erfindung betrifft einen Wärmespeicher, insbesondere als Teil einer Solaranlage, einer solaren Warmwasseranlage oder einer Geothermie-Anlage zur Beheizung eines Gebäudes.

### Stand der Technik:

Aus der AT 327 339 B ist ein Wärmespeicher aus nichtmetallischem, festem Speichermaterial bekannt, bei welchem ein Gemisch aus Natrium-Wasserglas und Eisensilizium als Bindemittel sowie vorzugsweise die Speichermaterialien Basalt, Serpentin und Basalt-Topas-Gemisch zum Einsatz kommen. Die Herstellung derartiger Wärmespeicher ist auf Grund der Anzahl der benötigten Materialien aufwändig.

### Technische Aufgabe:

Der Erfindung liegt die Aufgabe zu Grunde, einen Wärmespeicher zu schaffen, welcher einfach und preisgünstig aus handelsüblichem Materialien in praktisch beliebiger Größe herstellbar ist und ohne weiteres in die Heizanlage eines Hauses integrierbar ist, wobei insbesondere der Wärmespeicher in bestehende Gebäude nachträglich in einfacher Weise integrierbar sein soll.

A1 Diese Aufgabe wird erfindungsgemäß gelöst durch einen Wärmespeicher, insbesondere als Teil einer Solaranlage, einer solaren Warmwasseranlage oder einer Geothermie-Anlage zur Beheizung eines Gebäudes, gekennzeichnet durch folgende Komponenten:
a) wenigstens einen Wärmespeicherkörper, welcher eine Mehrzahl von Schichten aufweist, deren jede durch eine Mehrzahl oder Vielzahl von jeweils monolithischen Bausteinen gebildet ist,
b) und wenigstens zwei Wärmetransportleitungen, nämlich eine von einem ersten Fluid durchflossene oder durchfließbare Wärmezufuhrleitung, welche in den Wärmespeicherkörper eingebettet ist und in wenigstens einer der Schichten verläuft, wobei das erste Fluid Wärme an den Wärmespeicherkörper abzugeben und diesen hierdurch aufzuheizen imstande ist, sowie eine von einem zweiten Fluid durchflossene oder durchfließbare Wärmeentnahmeleitung, welche ebenfalls in den Wärmespeicherkörper eingebettet ist und ebenfalls in wenigstens einer der Schichten verläuft, wobei das zweite Fluid Wärme aus dem Wärmespeicherkörper aufzunehmen und nach außerhalb des Wärmespeichers abzuführen imstande ist.

Die Bausteine bestehen bevorzugt aus Keramik, Ton oder Schamott, also aus solchen Materialien, welche eine hohe Wärmespeicherkapazität aufweisen. Bevorzugt sind die Bausteine quaderförmige, ebene Platten.

Gegenüber bekannten Wärmespeichern des Standes der Technik besitzt der erfindungsgemäße Wärmespeicher den Vorteil, dass dieser in einfacher Weise und preisgünstig aus handelsüblichem Materialien, wie Keramik-, Ton- oder Schamottsteinen, in praktisch beliebiger Größe herstellbar ist. Der Wärmespeicher ist ohne weiteres in die Heizanlage eines Hauses integrierbar, wobei insbesondere der Wärmespeicher in bestehende Gebäude nachträglich in einfacher Weise integriert werden kann, zum Beispiel in einen alten, nicht mehr benötigten Heizungsraum.

Die Schichten sind bevorzugt ebene Schichten. Die Wärmezufuhrleitung und die Wärmeentnahmeleitung verlaufen bevorzugt nicht in der gleichen Schicht, d.h. bevorzugt gibt es keine Schicht, in welcher gleichzeitig sowohl die Wärmezufuhrleitung als auch die Wärmeentnahmeleitung verlaufen; vielmehr verlaufen die Wärmezufuhrleitung und die Wärmeentnahmeleitung bevorzugt in zueinander benachbarten Schichten. A2 Gemäß einer bevorzugten Variante der Erfindung verläuft die Wärmezufuhrleitung in wenigstens einer der Schichten und die Wärmeentnahmeleitung in wenigstens einer anderen der Schichten.

A3 Die Anzahl der Schichten beträgt vorzugsweise wenigstens drei, oder ein Vielfaches davon, wobei die Schicht oder Schichten, durch welche die Wärmezufuhrleitung verläuft, und die Schicht oder Schichten, durch welche die Wärmeentnahmeleitung verläuft, einander von Schicht zu Schicht abwechseln.

A4 Bevorzugt sind die Bausteine nebeneinander und/oder hintereinander aneinanderreihbar und stapelbar. Beispielsweise kann die Umrissform der Bausteine quader- oder plattenförmig sein. Bevorzugt sind alle Schichten identisch hergestellt.

A5 Gemäß einer Variante sind in wenigstens einer der Schichten mehrere oder alle der Bausteine mit je einer Rinne versehen und so angeordnet, dass diese Rinnen gemeinsam einen durchlaufenden, entweder geradlinigen oder gekrümmten oder teilweise geradlinigen und teilweise gekrümmten Kanal bilden, durch welchen eine der Wärmetransportleitungen verläuft oder in welchen eine der Wärmetransportleitungen zumindest teilweise versenkt ist.

A6 Gemäß einer bevorzugten Variante sind in wenigstens einer der Schichten mehrere oder alle der Bausteine mit je einer Rinne versehen und einander paarweise gegenüberliegend so angeordnet, dass diese Rinnen gemeinsam einen durchlaufenden rohrförmigen, entweder geradlinigen oder gekrümmten oder teilweise geradlinigen und teilweise gekrümmten Hohlraum bilden, in welchem eine der Wärmetransportleitungen verläuft.

A7 Bevorzugt weist die Rinne oder der rohrförmige Hohlraum einen ovalen, elliptischen oder in sonstiger Weise länglichen Querschnitt auf. A8 Bevorzugt ist hierbei der Durchmesser der Rinne oder des Hohlraums senkrecht zur Schicht größer ist als derjenige parallel zur Schicht.

A9 Die in der Rinne oder in dem Hohlraum verlaufende Wärmetransportleitung weist bevorzugt einen ovalen, elliptischen oder in sonstiger Weise länglichen Querschnitt auf, damit diese dicht und unter Druck an der Wandung der Rinne bzw. des Hohlraums anliegt und somit ein guter Wärmeübergang zwischen Baustein und Wärmetransportleitung entsteht, wenn diese durch das erste oder zweite Fluid unter inneren Druck gesetzt wird und somit dazu tendiert, unter elastischer Verformung einen kreisförmigen Querschnitt anzunehmen.

A10 Hierbei ist der Durchmesser der Wärmetransportleitung senkrecht zur Schicht bevorzugt größer als derjenige parallel zur Schicht, damit unter der innendruckbedingten Verformung der Wärmetransportleitung keine auseinandertreibenen Kräfte senkrecht zu den Schichten entstehen

A11 Bevorzugt ist der Durchmesser der Wärmetransportleitung im mechanisch entspannten Zustand derselben größer als der größte Durchmesser des Hohlraums oder der Rinne, da auf diese Weise auch im innendrucklosen Zustand der Wärmetransportleitung, nämlich durch die Rückstellkraft derselben, ein dichtes Anliegen derselben an den Bausteinen gewährleistet ist.

Gemäß einer Variante ist der Durchmesser der Wärmetransportleitung im mechanisch entspannten Zustand derselben größer als der kleinste Durchmesser des Hohlraums oder der Rinne.

Bevorzugt verläuft der Kanal oder der rohrförmige Hohlraum mäanderförmig. Der Wärmespeicherkörper ist bevorzugt von einer Wärmedämmung umgeben. Das erste und das zweite Fluid bestehen bevorzugt jeweils aus Wasser oder aus Wasser mit wenigstens einem darin gelösten Zusatzstoff, z.B. einem Korrosions- oder Frostschutzmittel.

A12 Die Bausteine können insbesondere solche sein, welche als Komponenten zur Herstellung von Fußböden mit Fußbodenheizung geeignet sind.

A13 Zwischen den Wärmetransportleitungen und den Begrenzungswänden der Rinnen kann sich ein elastisches, plastisches oder zähflüssiges wärmeleitendes Material befinden, welches den Wärmewiderstand zwischen den Wärmetransportleitungen und dem Wärmespeicherkörper herabsetzt.

Wenigstens ein Teil der Bausteine kann untereinander mittels eines ausgehärteten oder aushärtbaren Verbindungsstoffs, insbesondere Fliesenkleber, Zement oder Beton, miteinander mechanisch starr verbindbar oder verbunden sein. Dieser Verbindungsstoff besitzt ebenfalls eine hohe Wärmeleitfähigkeit.

Der Wärmespeicher kann insbesondere Teil der Heizanlage eines Hauses oder sonstigen Gebäudes sein. A14 Der Wärmespeicher kann Teil einer Solaranlage oder einer solaren Warmwasseranlage oder einer Geothermie-Anlage sein, mittels welcher das erste Fluid vor Eintritt in die Wärmezufuhrleitung aufheizbar ist.

A15 In dem Wärmespeicherkörper verläuft gemäß einer vorteilhaften Ausführungsform der Erfindung wenigstens ein Heizdraht zur, vorzugsweise zusätzlichen, elektrischen Beheizung des Wärmespeicherkörpers. Gemäß einer Ausführungsform ist in dem Wärmespeicherkörper wenigstens ein sonstiges Heizelement zur, vorzugsweise zusätzlichen, elektrischen Beheizung des Wärmespeicherkörpers angeordnet.

Der Wärmespeicher kann Teil einer Solaranlage sein, welche imstande ist, den Heizstrom für den Heizdraht oder für das sonstige Heizelement mittels Photovoltaik zu erzeugen. Gemäß einer Variante ist der Wärmespeicher Teil einer Windkraftanlage, welche imstande ist, den Heizstrom für den Heizdraht oder für das sonstige Heizelement mittels Windkraft zu erzeugen.

Gemäß einer besonders bevorzugten Variante der Erfindung ist eine Aufheizung des Wärmespeicherkörpers sowohl konvektiv über die Wärmezufuhrleitung als auch elektrisch mittels Heizdraht oder Heizelement möglich.

Die Wärmeentnahmeleitung ist bevorzugt mit einem Heizkörper oder einer Heizleitung zur Beheizung eines Raumes oder Gebäudes verbunden, so dass der Raum oder das Gebäude durch Entnahme von Wärme aus dem erfindungsgemäßen Wärmespeicher beheizbar ist.

Der Wärmespeicher kann, zusätzlich, an ein Fernwärmenetz angeschlossen sein. Diese Variante ermöglicht die Nutzung von überschüssiger, im Wärmespeicherkörper gespeicherter Wärme durch Einspeisung in das Fernwärmenetz. Gemäß einer Variante ist der Wärmespeicher Teil eines Fernwärmekraftwerks, welches insbesondere ein Solarkraftwerk sein kann.

Selbstverständlich brauchen die Schichten nicht horizontal orientiert zu sein; sie brauchen auch nicht parallel zueinander zu verlaufen.

Gemäß einer abweichenden Ausführungsform ist der Wärmespeicherkörper nicht schichtweise durch monolithische Bausteine gebildet, sondern durch ein vergossenes und ausgehärtetes Material, z.B. Beton, durch dessen Inneres die Wärmetransportleitungen verlaufen. In diesem Fall ist der Wärmespeicherkörper also nicht aus Schichten aufgebaut.

Gemäß einer anderen abweichenden Ausführungsform sind die Schichten nicht oder nicht alle durch monolithische Bausteine gebildet, sondern durch ein vergossenes und ausgehärtetes Material, z.B. Beton. In diesem Fall ist der Wärmespeicherkörper also aus Schichten aufgebaut, aber nicht oder nicht vollständig durch monolithische Bausteine gebildet.

Gemäß einer weiteren abweichenden Ausführungsform ist der Wärmespeicherkörper aus Schichten aufgebaut, von denen wenigstens eine durch monolithische Bausteine und wenigstens eine andere durch ein vergossenes und ausgehärtetes Material, z.B. Beton, gebildet ist. Vorzugsweise ist hierbei jede Schicht, in welcher eine Wärmetransportleitung verläuft, durch vergossenes und ausgehärtetes Material gebildet, wobei sich zwischen diesen Schichten wenigstens je eine solche Schicht befindet, welche durch monolithische Bausteine gebildet ist. In diesem Fall ist der Wärmespeicherkörper also aus Schichten aufgebaut, aber nicht vollständig durch monolithische Bausteine gebildet.

Gemäß einer weiteren Ausführungsform weist der Wärmespeicher keine Wärmezufuhrleitung auf. Statt dessen befindet sich in dem Wärmespeicherköper wenigstens ein elektrisches Heizelement, z.B. Heizkabel oder Heizwiderstand, mittels welchem der Wärmespeicherkörper elektrisch aufheizbar ist, beispielsweise per Photovoltaik.

Die Erfindung ermöglicht insbesondere den Eintrag von umweltfreundlich und CO₂-frei gewonnener Wärme in den Wärmespeicherkörper überwiegend im Sommer und deren allmähliche Entnahme zu Heizzwecken überwiegend im Winter, denn der erfindungsgemäße Wärmespeicher kann ohne weiteres so ausgelegt werden, dass eine monatelange Speicherung sehr großer Wärmemengen mit nur geringen Verlusten möglich ist. Der Bedarf an Brennstoffen wie Öl, Gas oder Kohle zur Beheizung von Gebäuden kann mit Hilfe der Erfindung mit einem sehr geringen baulichen Aufwand und sehr kostengünstig drastisch gesenkt oder sogar gänzlich beseitigt werden.

Kurzbeschreibung der Zeichnung, in welcher schematisch anhand von bevorzugten Ausführungsformen der Erfindung zeigen:
- Figur 1: einen Ausschnitt einer Schicht des aus Bausteinen zusammengesetzten Wärmespeicherkörpers eines erfindungs- gemäßen Wärmespeichers im Längsschnitt, wobei die Schnittrichtung in der Ebene dieser Schicht verläuft und innerhalb der Schicht eine rohrförmige Wärmetransportleitung angeordnet ist,
- Figur 2: einen der Bausteine, aus welchen der Wärmespeicherkörper von Figur 1 zusammengesetzt ist, in 3D-Darstellung, wobei der Baustein eine Rinne von halbovalförmigem Querschnitt aufweist,
- Figur 3: einen Abschnitt der Wärmetransportleitung von Figur 1,
- Figur 4: zwei der Bausteine von Figur 2, welche einander gegenüberliegend so relativ zueinander angeordnet sind, dass ihre Rinnen einen rohrförmigen Hohlraum von ovalem Querschnitt zur Aufnahme des Abschnitts der Wärmetransportleitung von Figur 3 bilden,
- Figur 5: den Wärmespeicherkörper, von welchem in Figur 1 eine Schicht gezeigt ist, dargestellt im Querschnitt entlang der Schnittebene A-A von Figur 1, welche senkrecht zu den Schichten verläuft, und
- Figur 6: den Querschnitt eines weiteren erfindungsgemäßen Wärme- speicherkörpers, welcher sich von demjenigen von Figur 5 durch das Vorhandensein von Heizdrähten unterscheidet.

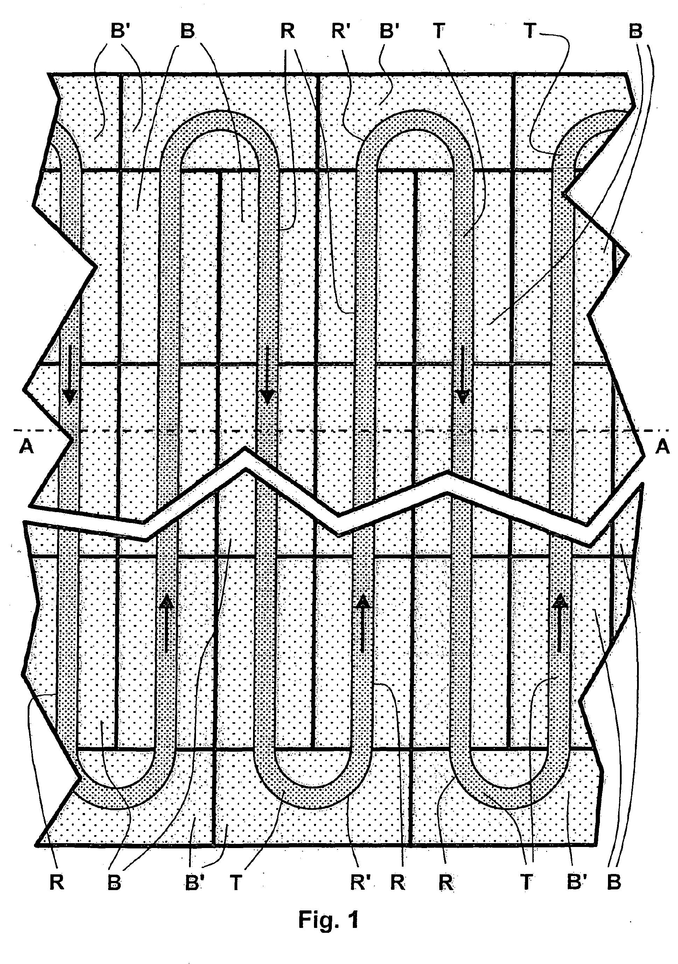

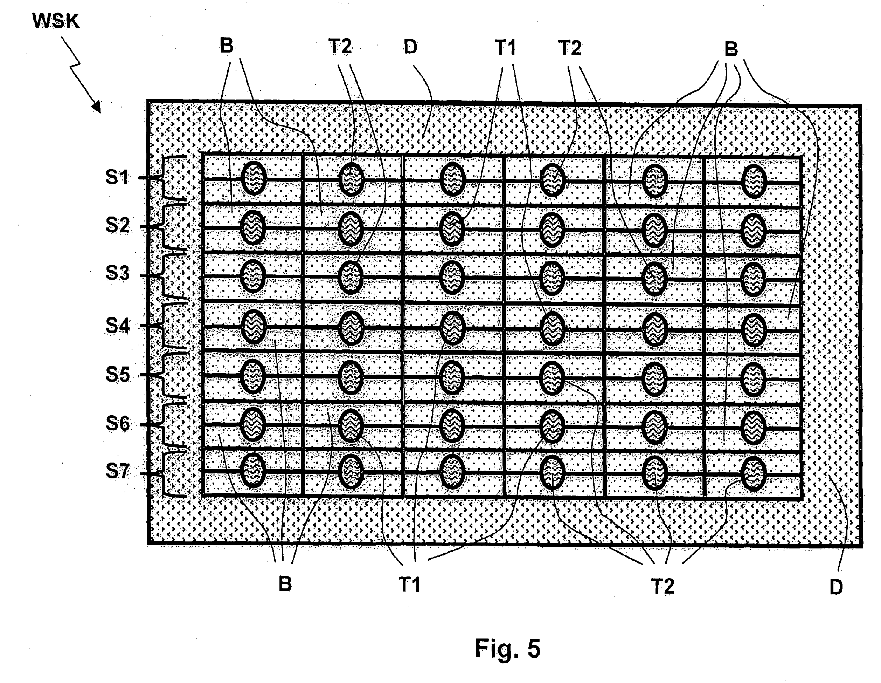

Ein erfindungemäßer Wärmespeicher weist gemäß einer bevorzugten Ausführungsform einen Wärmespeicherkörper WSK gemäß den Figuren 1 und 5 auf, welcher mehrere oder viele ebene Schichten, z.B. sieben ebene Schichten S1,S2,S3,S4,S5,S6,S7, aufweist, deren jede durch eine Vielzahl von jeweils monolithischen Bausteinen B gebildet ist

Ferner weist ein erfindungsgemäßer Wärmespeicher wenigstens zwei Wärmetransportleitungen T auf, nämlich eine Wärmezufuhrleitung T1 sowie eine Wärmeentnahmeleitung T2. Der Ausdruck "Wärmetransportleitung" mit dem Bezugszeichen T steht hierbei allgemein als Sammelbegriff für die Wärmezufuhrleitung T1 oder die Wärmeentnahmeleitung T2.

Die Wärmezufuhrleitung T1 ist von warm oder heiß in dieselbe eintretendem Wasser durchflossen bzw. durchfließbar, in den Wärmespeicherkörper WSK eingebettet und durchzieht nacheinander die Schichten S2, S4 und S4 jeweils mäanderförmig, so dass dieses Wasser in diesen Schichten Wärme an den Wärmespeicherkörper WSK abzugeben und diesen hierdurch weitgehend gleichmäßig aufzuheizen imstande ist.

Die Wärmeentnahmeleitung T2 ist ebenfalls in den Wärmespeicherkörper WSK eingebettet und durchzieht nacheinander die Schichten S1, S3, S5 und S7 jeweils mäanderförmig. Sie ist von Wasser durchflossen bzw. durchfließbar, welches kühl oder kalt in die Wärmeentnahmeleitung T2 eintritt und daher Wärme aus dem Wärmespeicherkörper WSK aufzunehmen und nach außerhalb des Wärmespeichers abzuführen imstande ist.

Der Wärmespeicherkörper WSK besteht aus den Schichten S1-S7. Jede dieser Schichten ist aus einer Mehrzahl von Bausteinen B oder B' zusammengesetzt.

Jeder Baustein B,B' ist mit einer Rinne R bzw. R' versehen und, abgesehen von der Rinne, quaderförmig, d.h. er besitzt eine quaderförmige Umrissform. Nicht alle Bausteine B,B' besitzen aber die gleiche Form; vielmehr kommen zwei verschiedene Formen B und B' von Bausteinen mit jeweils quaderförmiger Umrissform zum Einsatz. Die Bausteine B' befinden sich in den beiden Stirnbereichen jeder Schicht S1-S7 und weisen jeweils eine um 180° gekrümmte Rinne R' auf, während alle übrigen Bausteine B geradlinige Rinnen R aufweisen. Die Querschnittsform der Rinne ist halbovalförmig und in allen Bausteinen B,B' gleich.

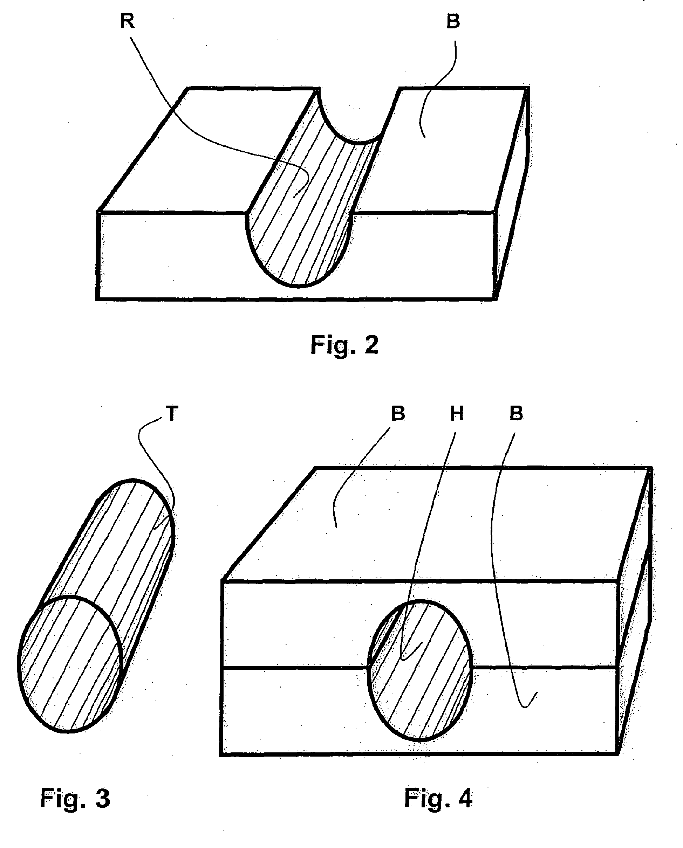

Ein Beispiel für einen Baustein B mit geradliniger Rinne R ist in Figur 2 dargestellt.

Je zwei untereinander baugleiche Bausteine B oder B' sind einander gegenüberliegend so angeordnet, dass deren Rinnen gemeinsam einen rohrförmigen, entweder geradlinigen oder gekrümmten Hohlraum H bilden; Figur 4 zeigt dies am Beispiel eines Paares von Bausteinen B mit geradliniger Rinne.

Insgesamt sind die Bausteine B und B' in jeder Schicht S1-S7 einander paarweise gegenüberliegend so angeordnet, dass ihre Rinnen R,R' gemeinsam einen durchlaufenden rohrförmigen Hohlraum H bilden, welcher die Schicht in deren Mittelebene mäanderförmig durchzieht. Um dies zu erreichen, sind diejenigen Abschnitte des Hohlraums H, welche sich in einem der beiden Stirnbereiche der Schicht befinden, jeweils durch Verwendung von Bausteinen B' mit gekrümmter Rinne R' um 180° gekrümmt, während die übrigen Abschnitte des Hohlraums H durch Verwendung von Bausteinen B mit geradliniger Rinne R geradlinig verlaufen.

Jede Schicht S1-S7 ist somit durch je eine doppelte Lage von Bausteinen B,B' gebildet.

Durch den Hohlraum H jeder Schicht S1-S7 verläuft eine der Wärmetransportleitungen T, nämlich in den Schichten S2, S4 und S6 die Wärmezufuhrleitung T1 und in den Schichten S1, S3, S5 und S7 die Wärmeentnahmeleitung T2. Somit wechseln diejenigen Schichten, durch welche die Wärmezufuhrleitung T1 verläuft, und diejenigen Schichten, durch welche die Wärmeentnahmeleitung T2 verläuft, einander von Schicht zu Schicht ab.

Da die Hohlräume H die Schichten mäanderförmig durchziehen, gilt dies auch für die Wärmetransportleitungen T.

Der rohrförmige Hohlraum H besitzt im gezeigten Beispiel einen ovalen Querschnitt, wobei sein Durchmessersenkrecht zur Schicht größer ist als derjenige parallel zur Schicht. Auch die in dem Hohlraum H verlaufende Wärmetransportleitung T weist einen ovalen Querschnitt auf, wobei auch deren Durchmesser senkrecht zur Schicht größer ist als derjenige parallel zur Schicht.

Diese Geometrie der Wärmetransportleitungen T besitzt den Vorteil, dass es bei Beaufschlagung des Wassers im Inneren der Leitung mit Druck von z.B. 2 bar zu einer elastischen Verformung des Leitungsquerschnitts kommt, weil der ovale Leitungsquerschnitt unter Innendruck die Tendenz aufweist, kreisförmig zu werden. Hierdurch kommt es über wenigstens einen Teil des Leitungsumfangs zu einem dichten Anliegen der Wärmetransportleitung T unter Druck gegen die Wandungen der Rinnen R,R' und somit zu einer sehr deutlichen Verbesserung des Wärmeübergangs zwischen der Wärmetransportleitung T und dem Wärmespeicherkörper WSK.

Ein Abschnitt der Wärmetransportleitung T ist in Figur 3 gezeigt.

Die Rinnen R,R' in den Bausteinen B und B' können auch jeweils einen halbrunden Querschnitt aufweisen, so dass nach dem Aufeinanderschichten wenigstens zweier paarweise zusammengehörender Bausteine - aufeinander geschichtet wie in Figur 4 gezeigt - ein entweder geradliniger oder gekrümmter Hohlraum H ausgebildet ist, welcher einen kreisrunden Querschnitt aufweist. In diesem Fall weist die in dem Hohlraum H befindliche Wärmetransportleitung T einen ebenfalls kreisrunden Querschnitt auf, dessen Außendurchmesser passgenau in die lichte Weite des Hohlraums H passen muss, um einen guten Wärmeübergang zu gewährleisten. Somit befindet sich die untere Hälfte der Wärmetransportleitung T im unteren Baustein, die obere Hälfte Wärmetransportleitung T im oberen Baustein, bezogen auf eine horizontale Durchmesser-Schnittebene.

Die sieben ebenen Schichten S1-S7 sind alle identisch aufgebaut. Figur 1 zeigt einen mittigen Querschnitt durch einen Ausschnitt einer der Schichten, wobei die Querschnittsebene parallel zu der Schicht verläuft. Die Wärmetransportleitung T durchzieht die Schicht innerhalb des von den Rinnen R,R' gebildeten durchgängigen Hohlraums mäanderförmig und weist an den Stirnseiten der Schicht 180°-Bögen auf. Die Strömungsrichtung des Wassers in der Wärmetransportleitung ist durch Pfeile angedeutet.

Figur 5 zeigt den Wärmespeicherkörper WSK, von welchem in Figur 1 eine Schicht gezeigt ist, im Querschnitt entlang der Schnittebene A-A von Figur 1, welche senkrecht zu den Schichten S1-S7 verläuft. Die Wärmezufuhrleitung T1 durchzieht die Schichten S2, S4 und S6 jeweils mäanderförmig; Die Wärmeentnahmeleitung T2 durchzieht die Schichten S1, S3, S5 und S7 jeweils mäanderförmig.

Die Bausteine B,B' können insbesondere aus Keramik, Ton oder Schamott bestehen, also aus solchen Materialien, welche eine hohe Wärmespeicherkapazität aufweisen. Das Wasser in den Wärmetransportleitungen T kann mit einem oder mehreren darin gelösten Zusatzstoffen, z.B. zur Korrosionsminderung oder zum Frostschutz, versetzt sein.

Die Bausteine B,B' können untereinander mittels eines aushärtbaren Verbindungsstoffs, insbesondere Fliesenkleber, Zement oder Beton, miteinander mechanisch starr verbunden werden, so dass der Wärmespeicherköper WSK ein zusammenhängender, starrer Festköper ist. Ebenso ist es möglich, die Bausteine B,B' nur lose aufeinander zu legen und dergestalt lose, aufeinander liegende Schichten der Bausteine B,B' auszubilden.

Der Wärmespeicherkörper WSK ist zur Reduktion der Wärmeverluste von einer Wärmedämmung D umgeben (Figur 5). Die Wärmedämmung kann z.B. eine dicke Schicht aus einem stark wärmedämmenden Material sowie eine Lage Wärmereflexionsfolie umfassen.

Der Wärmespeicher kann Teil der Heizanlage eines Gebäudes und z.B. im Keller oder unter oder neben dem Gebäude im Erdreich versenkt sein. Das Wasser, welches zur Durchströmung der Wärmezufuhrleitung T1 vorgesehen ist, kann vor Eintritt in dieselbe insbesondere mittels Solarenergie aufgeheizt werden. Gemäß einer anderen Variante wird das Wasser, welches zur Durchströmung der Wärmezufuhrleitung T1 vorgesehen ist, vor Eintritt in dieselbe mittels Geothermie aufgeheizt werden.

Somit kann der Wärmespeicher WSK insbesondere Teil einer solaren Warmwasseranlage sein, in welcher dieses Wasser sich in einem Kreislauf befindet, der zum Teil durch die Wärmezufuhrleitung T1 und zum Teil durch der Sonnenstrahlung ausgesetzte Röhren gebildet ist.

Die Wärmeentnahmeleitung T2 kann mit Heizkörpern oder einer Fußboden-Heizschlange zur Beheizung des Gebäudes verbunden sein. Selbstverständlich kann Wärme gleichzeitig über die Wärmezufuhrleitung T1 zugeführt und über die Wärmeentnahmeleitung T2 entnommen werden.

Bei hinreichend großer Auslegung des Wärmespeicherköpers WSK ist es möglich, in diesem während eines Sommers so viel Wärme zu speichern, dass das Gebäude so lange ausschließlich mit Wärme aus dem Wärmespeicherkörper WSK beheizt werden kann, dass während des ganzen folgenden Winters keine Zufuhr von Fremdenergie nötig ist. Ein Wärmespeicherkörper WSK von der Größe eines kleinen Zimmers (z.B. 10-20m³) kann z.B. im Fall von kleinen bis mittleren Einfamilienhäusern hierfür bereits ausreichend sein; selbst bei wesentlich kleineren Wärmespeicherkörpern ist die mit Hilfe der Erfindung erzielbare Energieeinsparung erheblich.

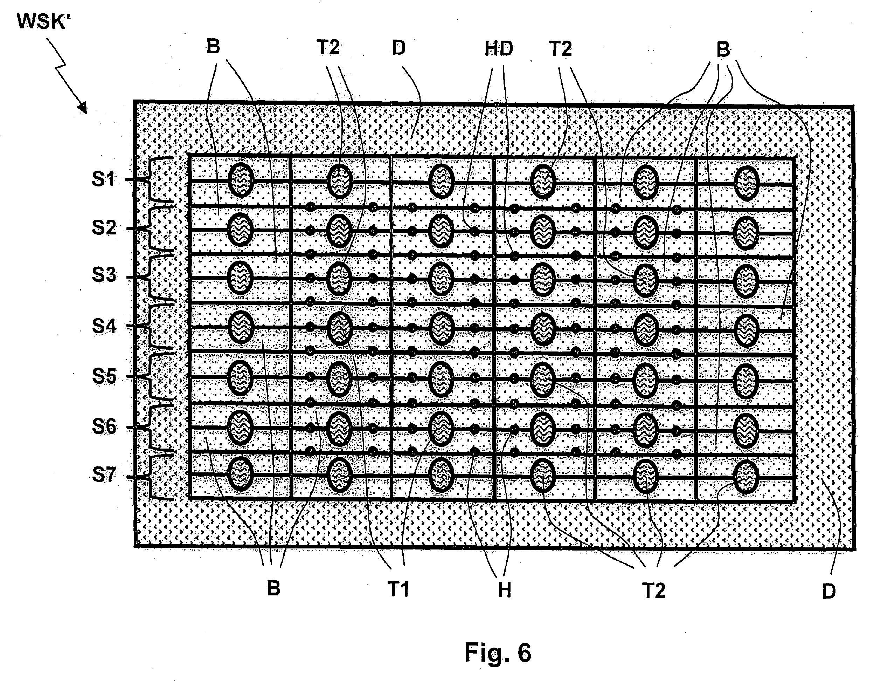

Figur 6 zeigt eine Ausführungsform eines erfindungsgemäßen Wärmespeicherkörpers WSK', welche sich von dem Wärmespeicherkörper WSK von Figur 5 durch zusätzlich eingelagerte Heizdrähte HD unterscheidet. Diese dienen zur elektrischen zusätzlichen Beheizung des Wärmespeicherkörpers WSK'. Der hierfür nötige Strom kann insbesondere umweltfreundlich mittels einer Photovoltaikanlage oder einer Windkraftanlage erzeugt werden.

Gemäß dieser Ausführungsform ist der erfindungsgemäße Wärmespeicher Teil einer Solaranlage, welche sowohl über eine Solar-Warmwasseranlage zur Aufheizung des Wassers für die Wärmezufuhrleitung T1 als auch eine Photovoltaikanlage oder Windkraftanlage zur zusätzlichen Beheizung des Wärmespeicherkörpers WKS' auf elektrischem Weg verfügt.

Es ist denkbar, den Wärmespeicher allein mittels wenigstens eines Heizdrahtes HD oder sonstigen Heizelementes zur elektrischen Beheizung des Wärmespeicherkörpers WSK' aufzuheizen, indem zwischen den Schichten zur Wärmeeintragung nur der Heizdraht verläuft. Dieser Heizdraht bzw. das Heizelement kann Teil einer Solaranlage sein, welche imstande ist, den Heizstrom für den Heizdraht HD bzw. das Heizelement mittels Photovoltaik zu erzeugen. Die Wärmeentnahme geschieht, wie es vorstehend für den Wärmespeicher gemäß der Figuren 1 bis 5 beschrieben worden ist.

### Gewerbliche Anwendbarkeit:

Die Erfindung ist gewerblich anwendbar z.B. im Bereich der Haustechnik, der Heizungstechnik, der Energieversorgungs- und Fernwärmetechnik sowie der Umwelttechnik.

### Liste der Bezugszeichen:

- B: Baustein mit geradliniger Rille R
- B': Baustein mit gekrümmter Rille R'
- D: Wärmedämmung
- H: Hohlraum
- HD: Heizdrähte
- R: geradlinige Rille
- R': gekrümmte Rille
- T: Wärmetransportleitung
- S1-S7: Schichten
- T1: Wärmezufuhrleitung
- T2: Wärmeentnahmeleitung
- WSK: Wärmespeicherkörper ohne Heizdrähte
- WSK': Wärmespeicherkörper mit Heizdrähten HD

## Patentansprüche

1. Wärmespeicher, insbesondere als Teil einer Solaranlage, einer solaren Warmwasseranlage oder einer Geothermie-Anlage zur Beheizung eines Gebäudes, **gekennzeichnet durch** folgende Komponenten:
a) wenigstens einen Wärmespeicherkörper (WSK,WSK'), welcher eine Mehrzahl von Schichten (S1-S7) aufweist, deren jede **durch** eine Mehrzahl oder Vielzahl von jeweils monolithischen Bausteinen (B,B') gebildet ist,
b) und wenigstens zwei Wärmetransportleitungen (T,T1,T2), nämlich
- eine von einem ersten Fluid durchflossene oder durchfließbare Wärmezufuhrleitung (T1), welche in den Wärmespeicherkörper (WSK,WSK') eingebettet ist und in wenigstens einer der Schichten (S1-S7) verläuft, wobei das erste Fluid Wärme an den Wärmespeicherkörper (WSK,WSK') abzugeben und diesen hierdurch aufzuheizen imstande ist,
- sowie eine von einem zweiten Fluid durchflossene oder durchfließbare Wärmeentnahmeleitung (T2), welche ebenfalls in den Wärmespeicherkörper (WSK,WSK') eingebettet ist und ebenfalls in wenigstens einer der Schichten (S1-S7) verläuft, wobei das zweite Fluid Wärme aus dem Wärmespeicherkörper (WSK,WSK') aufzunehmen und nach außerhalb des Wärmespeichers abzuführen imstande ist.

2. Wärmespeicher nach einem der vorigen Ansprüche, **dadurch gekennzeichnet, dass**
- in wenigstens einer der Schichten (S2,S4,S6) die Wärmezufuhrleitung (T1) verläuft,
- und in wenigstens einer anderen der Schichten (S1,S3,S5,S7) die Wärmeentnahmeleitung (T2) verläuft.

3. Wärmespeicher nach Anspruch 2, **dadurch gekennzeichnet,**
**dass** die Anzahl der Schichten (S1-S7) wenigstens drei beträgt, wobei die Schicht oder Schichten (S2,S4,S4), durch welche die Wärmezufuhrleitung (T1) verläuft, und die Schicht oder Schichten (S1,S3,S5,S7), durch welche die Wärmeentnahmeleitung (T2) verläuft, einander von Schicht zu Schicht abwechseln.

4. Wärmespeicher nach einem der vorigen Ansprüche, **dadurch gekennzeichnet, dass** die Bausteine (B,B') nebeneinander und/oder hintereinander aneinander reihbar und stapelbar sind.

5. Wärmespeicher nach einem der vorigen Ansprüche, **dadurch gekennzeichnet, dass** in wenigstens einer der Schichten (S1-S7) mehrere oder alle der Bausteine (B,B')
- mit je einer Rinne (R) versehen sind,
- und so angeordnet sind, dass diese Rinnen (R) gemeinsam einen durchlaufenden, entweder geradlinigen oder gekrümmten oder teilweise geradlinigen und teilweise gekrümmten Kanal bilden, durch welchen eine der Wärmetransportleitungen (T,T1,T2) verläuft oder in welchen eine der Wärmetransportleitungen (T,T1,T2) zumindest teilweise versenkt ist.

6. Wärmespeicher nach einem der Ansprüche 1 bis 4, **dadurch gekennzeichnet, dass** in wenigstens einer der Schichten (S1-S7) mehrere oder alle der Bausteine (B, B')
- mit je einer Rinne (R) versehen sind,
- und einander paarweise gegenüberliegend so angeordnet sind, dass diese Rinnen (R) gemeinsam einen durchlaufenden rohrförmigen, entweder geradlinigen oder gekrümmten oder teilweise geradlinigen und teilweise gekrümmten Hohlraum (H) bilden, in welchem eine der Wärmetransportleitungen (T,T1,T2) verläuft.

7. Wärmespeicher nach Anspruch 5 oder 6, **dadurch gekennzeichnet,**
**dass** die Rinne (R) oder der rohrförmige Hohlraum (H) einen halbrunden bzw. runden, ovalen, elliptischen oder in sonstiger Weise länglichen Querschnitt aufweist.

8. Wärmespeicher nach Anspruch 7, **dadurch gekennzeichnet, dass** der Durchmesser der Rinne (R) oder des Hohlraums (H) senkrecht zur Schicht (S1-S7) größer ist als derjenige parallel zur Schicht (S1-S7).

9. Wärmespeicher nach einem der Ansprüche 5 bis 8, **dadurch gekennzeichnet, dass** die in der Rinne (R) oder in dem Hohlraum (H) verlaufende Wärmetransportleitung (T,T1,T2) einen runden, ovalen, elliptischen oder in sonstiger Weise länglichen Querschnitt aufweist.

10. Wärmespeicher nach Anspruch 9, **dadurch gekennzeichnet, dass** der Durchmesser der Wärmetransportleitung (T,T1,T2) senkrecht zur Schicht (S1-S7) größer ist als derjenige parallel zur Schicht (S1-S7).

11. Wärmespeicher nach einem der vorigen Ansprüche, **dadurch gekennzeichnet, dass** der Durchmesser des Wärmetransportleitung (T,T1,T2) im mechanisch entspannten Zustand derselben größer ist als der größte Durchmesser des Hohlraums (H) oder der Rinne (R).

12. Wärmespeicher nach einem der vorigen Ansprüche, **dadurch gekennzeichnet, dass** die Bausteine (B,B') solche sind, welche als Komponenten zur Herstellung von Fußböden mit Fußbodenheizung geeignet sind.

13. Wärmespeicher nach einem der vorigen Ansprüche, **dadurch gekennzeichnet, dass** sich zwischen den Wärmetransportleitungen (T,T1,T2) und den Begrenzungswänden der Rinnen (R) ein elastisches, plastisches oder zähflüssiges wärmeleitendes Material befindet.

14. Wärmespeicher nach einem der vorigen Ansprüche, **dadurch gekennzeichnet, dass** der Wärmespeicher Teil einer Solaranlage oder einer solaren Warmwasseranlage oder einer Geothermie-Anlage ist, mittels welcher das erste Fluid vor Eintritt in die Wärmezufuhrleitung aufheizbar ist

15. Wärmespeicher nach einem der vorigen Ansprüche, **dadurch gekennzeichnet, dass** in dem Wärmespeicherkörper (WSK')
- wenigstens ein Heizdraht (HD) zur elektrischen Beheizung des Wärmespeicherkörpers (WSK') verläuft
- oder wenigstens ein sonstiges Heizelement zur elektrischen Beheizung des Wärmespeicherkörpers (WSK') angeordnet ist.
